# EUROPÄISCHE PATENTANMELDUNG

(11) **EP 1 193 131 A1**
(43) Veröffentlichungstag der Anmeldung: **03.04.2002**
(21) Anmeldenummer: 01122352.6
(22) Anmeldetag: 19.09.2001
(51) Int. Cl.: B60R 16/02

(54) **Kraftfahrzeug mit mehreren drahtlos miteinander kommunizierenden Modulen**

(30) Priorität: 21.09.2000 DE 10046698
(71) Anmelder: ROBERT BOSCH GMBH, 70442 Stuttgart (DE)
(72) Erfinder: Weigl, Andreas, 76351 Linkenheim-Hochstetten (DE); Enders, Thorsten, 71665 Vaihingen (DE); Hugel, Robert, 76199 Karlsruhe (DE); Schirmer, Juergen, 69124 Heidelberg (DE)

(57) **Zusammenfassung**

Es wird ein Kraftfahrzeug und ein Modul vorgeschlagen, wobei das Kraftfahrzeug mehrere Module umfasst, die drahtlos miteinander kommunizieren.

## Beschreibung

### Stand der Technik

Die Erfindung geht aus von einem Kraftfahrzeug und einem Modul nach der Gattung der nebengeordneten Ansprüche. Es sind Signalübertragungen im Kraftfahrzeug bekannt, die drahtgebunden durchgeführt werden, beispielsweise über eine oder mehrere elektrisch leitende Leitungen oder auch einen Bus, beispielsweise einen CAN-Bus.

### Vorteile der Erfindung

Das erfindungsgemäße Kraftfahrzeug und das erfindungsgemäße Modul mit den Merkmalen der nebengeordneten Ansprüche haben demgegenüber den Vorteil, dass die Signalübertragung im Kraftfahrzeug drahtlos erfolgen kann. Erfahrungsgemäß ist es so, dass ein Großteil der Funktions- und Systemausfälle auf Leitungsfehler zurückzuführen ist. Die vorliegende Erfindung eliminiert bzw. reduziert diese Problematik. Weiterhin führt eine Verringerung der Leitungszahl von elektrisch leitfähigen Verbindungen zu einer Gewichtsreduzierung des Fahrzeugs und einem geringeren Arbeitsaufwand hinsichtlich des Einbaus und der Installation des Kabelbaumes. Zu den einzelnen Modulen, die im Kraftfahrzeug miteinander Signale austauschen, führt lediglich noch die Spannungsversorgung; Daten- und Signalleitungen sind nicht erforderlich.

Weiterhin ist von Vorteil, dass das erste Modul und/oder das zweite Modul als ein kombiniertes Sende-/Empfangsmodul ausgebildet ist. Dadurch kommunizieren die Geräte bzw. die Module miteinander auf bidirektionale Weise.

Weiterhin ist von Vorteil, dass das erste Modul in einem ersten Karosserieteil angeordnet ist, dass das zweite Modul in einem zweiten Karosserieteil angeordnet ist und dass das erste Karosserieteil und das zweite Karosserieteil beweglich miteinander verbunden sind. Insbesondere die beweglichen Komponenten eines Kraftfahrzeugs, z. B. die Fahrzeugtür, stellen für die Leitungszuführung kritische Bereiche dar; die Leitungen sind in der Zuführung zwischen den beweglich angeordneten Komponenten des Kraftfahrzeugs, d. h. in der Regel verschiedenen Karosserieteilen, aufgrund der auftretenden mechanischen Belastung einer erhöhten Alterung unterworfen. Mit einer erhöhten Leitungsanzahl elektrisch leitender Verbindungen liegt auch eine höhere Fehleranfälligkeit vor.

Weiterhin ist von Vorteil, dass das Kraftfahrzeug ein drittes Modul umfasst, dass das dritte Modul ein Sendemodul oder ein Empfangsmodul oder ein Sende-/Emfangsmodul ist und dass Signale sowohl zwischen dem ersten Modul und dem dritten Modul, also auch zwischen dem zweiten Modul und dem dritten Modul übertragbar sind. Dadurch wird gewährleistet, dass ein Modul nicht nur mit genau einem anderen Modul kommunizieren kann, sondern dass ein Modul mit mehreren Modulen - gleichzeitig oder auch nach einander - kommunizieren kann. Falls eines der Module als eine Zentraleinheit mit Steuerungsaufgaben für andere Module ausgebildet ist, was erfindungsgemäß auch vorgesehen ist, dann ist es vorteilhaft, dass die Module sowohl mit dem als Zentraleinheit ausgebildeten Modul als auch untereinander drahtlos kommunizieren können.

Weiterhin ist von Vorteil, dass das Signalübertragung4smedium eine Funkschnittstelle ist. Bei einer Funkschnittstelle können die Signale zwischen den Modulen auch dann übertragen werden, wenn keine direkte Sichtverbindung vorhanden ist. Dadurch ist eine Funkschnittstelle gegenüber beispielsweise einer Infrarotschnittstelle vorteilhaft.

Weiterhin ist von Vorteil, dass die Funkschnittstelle gemäß einem Standard zur drahtlosen Kommunikation betreibbar ist. Dadurch ist es möglich, dass zum Einen kostengünstige Module Verwendung finden können und zum Anderen, dass keine Kompatibilitätsprobleme entstehen.

### Zeichnung

Ein Ausführungsbeispiel der Erfindung ist in der Zeichnung dargestellt und in der nachfolgenden Beschreibung näher erläutert.

Es zeigen
Figur 1 ein Kraftfahrzeug mit erfindungsgemäßen Modulen und
Figur 2 ein erfindungsgemäßes Modul.

### Beschreibung des Ausführungsbeispiels

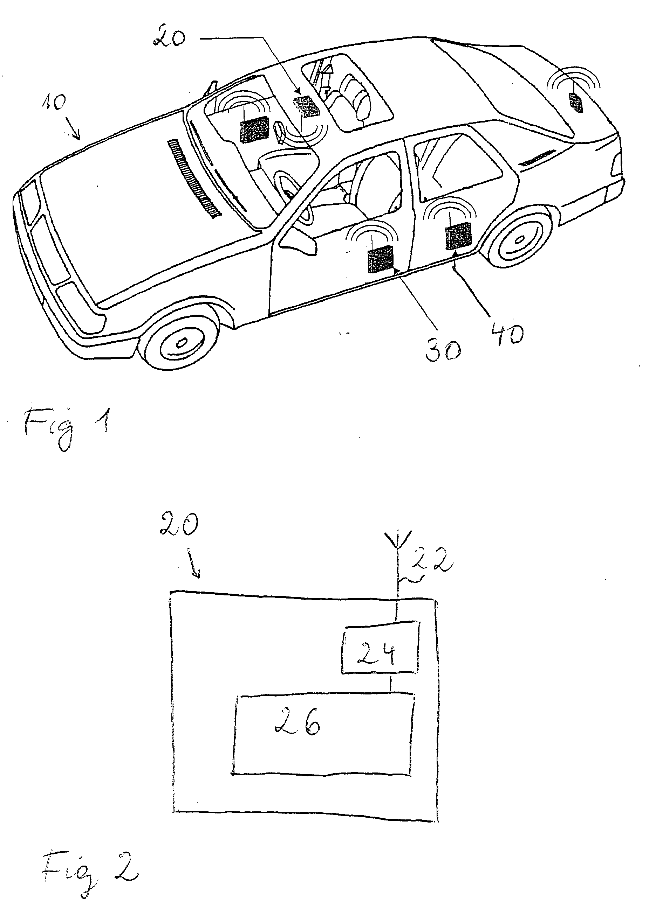

In Figur 1 ist ein Kraftfahrzeug 10 dargestellt, das mit einem ersten erfindungsgemäßen Modul 20 und einem zweiten erfindungsgemäßen Modul 30 ausgerüstet ist. Weiterhin ist in Figur 1 das Kraftfahrzeug 10 mit einem dritten Modul 40 ausgerüstet. Das dritte Modul 40 ist jedoch als optional anzusehen und muss nicht notwendiger Weise im Kraftfahrzeug 10 vorhanden sein. In der Regel wird jedoch ein erfindungsgemäß ausgerüstetes Kraftfahrzeug 10 eine Vielzahl von erfindungsgemäßen Modulen 20, 30, 40 aufweisen.

In Figur 2 ist ein Blockschaltbild des ersten erfindungsgemäßen Moduls 20 dargestellt. Das erste Modul 20 umfasst eine Antenne 22, eine Vorrichtung 24 und eine Steuereinheit 26. Die Steuereinheit 26 ist insbesondere als Mikrocontroller bzw. Prozessor ausgebildet. Die Vorrichtung 24 ist entweder als Sender 24 oder als Empfänger 24 oder als Sendeempfänger 24 ausgebildet, je nachdem, ob das erste Modul 20 als Sendemodul, Empfangsmodul oder Sende/Empfangsmodul ausgebildet ist. Die anderen Module 30, 40 sind prinzipiell ebenso aufgebaut wie das erste Modul 20.

Erfindungsgemäß ist sowohl vorgesehen, dass eines der Module 20, 30, 40, beispielsweise das erste Modul 20, eine Koordinationsfunktion für die Module 20, 30, 40 übernimmt, so dass ein solchermaßen ausgezeichnetes Modul als Zentraleinheit aufgefasst werden könnte. Erfindungsgemäß ist jedoch auch vorgesehen, dass alle Module 20, 30, 40 gleichberechtigt miteinander kommunizieren. Je nach dem, ob ein Bestimmtes der Module Informationen bzw. Signale lediglich senden oder empfangen oder aber sowohl senden als auch empfangen können muß, ist es als Sendemodul, Empfangsmodul oder als Sende-/Empfangsmodul ausgebildet.

Insbesondere sei der einfache Fall vorgesehen, dass das erste Modul 20 als Sendemodul ausgebildet ist und dass das zweite Modul 30 als Empfangsmodul ausgebildet ist. Ein Signal, dass vom ersten Modul 20 zum zweiten Modul 30 zu übertragen ist, wird dann vom ersten Modul 20 ausgesendet und vom zweiten Modul 30 über eine Funkschnittstelle empfangen. In diesem Szenario ist das erste Modul mit einer als Sender ausgebildeten Vorrichtung 24 ausgestattet und das zweite Modul 30 ist mit einer als Empfänger ausgebildeten Vorrichtung ausgestattet, die zur Vorrichtung 24 des erste Moduls 20 analog ausgebildet ist.

In besonders vorteilhafter Weise ist die Erfindung einsetzbar, wenn die miteinander kommunizierenden Module 20, 30, 40 in verschiedenen Karosserieteilen des Kraftfahrzeugs 10 vorgesehen sind, wobei die verschiedenen Karosserieteile beweglich miteinander verbunden sind. Verschiedene Karosserieteile des Kraftfahrzeugs 10 sind zwar in Figur 1 nicht näher bezeichnet; es ist jedoch klar, dass ein erfindungsgemäßes Kraftfahrzeug 10 beispielsweise, über eine Tür verfügt, die beweglich mit dem Rest des Kraftfahrzeugs 10 verbunden ist, beispielsweise über ein Scharnier oder Ähnliches. Eine elektrisch leitfähige Leitung oder auch ein Bündel von elektrisch leitfähigen Leitungen (Bus bzw. Bussystem) ist bzw. sind in der Zuführung zum beweglichen Karosserieteil des Kraftfahrzeugs 10 aufgrund der auftretenden mechanischen Belastung einer erhöhten Alterung unterworfen. Erfindungsgemäß ist deswegen vorgesehen, höchstens zur Spannungsversorgung elektrisch leitfähige Leitungen zwischen beweglich vorgesehenen Karosserieteilen des Kraftfahrzeugs 10 vorzusehen, aber nicht bzw. in vermindertem Umfang zur Signalübertragung. Dadurch können Leitungen eingespart werden, was zu einer Gewichtsreduzierung des Fahrzeugs und einem geringeren Arbeitsaufwand hinsichtlich des Einbaus und der Installation des Kabelbaumes führt.

Erfindungsgemäß ist insbesondere vorgesehen, die Daten- bzw. Signalübertragung zwischen den Modulen 20, 30, 40 gemäß einem Standard zur drahtlosen Kommunikation zu betreiben. Dies soll beispielhaft anhand des DECT-Systems erfolgen. Bei diesem System handelt es sich um einen in Europa bei kabellosen Telefonsystemen verwendeten Standard mit digitaler Signalübertragung. Vorteile eines solchen Vernetzungskonzeptes sind eine störunempfindliche Datenübertragung aufgrund der digitalen Übertragungsart und eine hinsichtlich Datenverlusten manipulationssichere Übertragung.

Hierbei kann die drahtlose Kommunikation zwischen einzelnen Systemen hergestellt werden, wobei die einzelnen Module 20, 30, 40 in der Regel sowohl als Sender als auch als Empfänger fungieren (Sende-/Empfangsmodule). Solche Systeme beinhalten in der Regel eigene Mikrocontroller bzw. Prozessoren, die in großer Stückzahl gefertigt werden, so dass sich eine zusätzliche Einbindung eines DECT-Mikrocontrollers auch in engen finanziellen Grenzen halten würde. Die einzelnen Komponenten bzw. Module 20, 30, 40 eines solchen Kommunikationssystems sind auch nachträglich noch in ein solches System zu integrieren, so dass das Kraftfahrzeug 10 beispielsweise durch während seines Produktlebenszyklus zusätzlich hinzugefügte Module 20, 30, 40 erweiterbar ist, wobei sich solche nachträglich zugerüsteten Module 20, 30, 40 in ein bestehendes drahtloses Kommunikationssystem einfügen könnten.

Zu den einzelnen Modulen 20, 30, 40 führen nur noch die Spannungsversorgungen; Daten und Signalleitungen sind nicht bzw. in vermindertem Umfang erforderlich. Sämtliche Steuer-, Zustands- und Diagnosedaten, die zwischen den Modulen 20, 30, 40 ausgetauscht werden müssen, werden per Funk übertragen.

## Patentansprüche

1. Kraftfahrzeug (10) mit einem ersten Modul (20) und mit einem zweiten Modul (30), wobei das erste Modul (20) ein Sendemodul ist, wobei das zweite Modul (30) ein Empfangsmodul ist und wobei Signale über ein Signalübertragungsmedium von dem ersten Modul (20) zu dem zweiten Modul (30) übertragbar sind, **dadurch gekennzeichnet, dass** das Signalübertragungsmedium eine drahtlos ausgebildete Schnittstelle ist.

2. Kraftfahrzeug (10) nach Anspruch 1, **dadurch gekennzeichnet, dass** das erste Modul (20) und/oder das zweite Modul (30) als ein kombiniertes Sende/Empfangsmodul ausgebildet ist.

3. Kraftfahrzeug (10) nach einem der vorhergehenden Ansprüche, **dadurch gekennzeichnet, dass** das erste Modul (20) in einem ersten Karosserieteil angeordnet ist, dass das zweite Modul in einem zweiten Karosserieteil angeordnet ist und dass das erste Karosserieteil und das zweite Karosserieteil beweglich miteinander verbunden sind.

4. Kraftfahrzeug (10) nach einem der vorhergehenden Ansprüche, **dadurch gekennzeichnet, dass** das Kraftfahrzeug (10)ein drittes Modul (40) umfasst, dass das dritte Modul (40) ein Sendemodul oder ein Empfangsmodul oder ein Sende-/Empfangsmodul ist und dass Signale sowohl zwischen dem ersten Modul (20) und dem dritten Modul (40) als auch zwischen dem zweiten Modul (30) und dem dritten Modul (40) übertragbar sind.

5. Kraftfahrzeug (10) nach einem der vorhergehenden Ansprüche, **dadurch gekennzeichnet, dass** das Signalübertragungsmedium eine Funkschnittstelle ist.

6. Kraftfahrzeug (10) nach Anspruch 5, **dadurch gekennzeichnet, dass** die Funkschnittstelle gemäß einem Standard zur drahtlosen Kommunikation betreibbar ist.

7. Modul (20, 30, 40) zum Betrieb in einem Kraftfahrzeug (10) nach einem der vorhergehenden Ansprüche.
